# EUROPÄISCHE PATENTSCHRIFT

(11) **EP 4 501 090 B1**
(45) Veröffentlichungstag und Bekanntmachung des Hinweises auf die Patenterteilung: **07.10.2026**
(21) Anmeldenummer: 24185178.1
(22) Anmeldetag: 28.06.2024
(51) Int. Cl.: A01B 69/00, G06V 20/56

(54) **ANORDNUNG ZUR ERKENNUNG EINER EVENTUELLEN ABWEICHUNG EINES LANDWIRTSCHAFTLICHEN FAHRZEUGS VON EINEM SOLLWEG BEI EINER BEARBEITUNG VON IN REIHEN ANGEBAUTEN PFLANZEN, ENTSPRECHENDES FAHRZEUG UND**
DEVICE FOR DETECTING POSSIBLE DEVIATION OF AN AGRICULTURAL VEHICLE FROM A DESIRED PATH WHEN PROCESSING PLANTS CULTIVATED IN ROWS, CORRESPONDING VEHICLE AND VEHICLE
SYSTÈME DE DÉTECTION D'UN ÉCART ÉVENTUEL D'UN VÉHICULE AGRICOLE À PARTIR D'UNE VOIE DE CONSIGNE LORS D'UN TRAITEMENT DE PLANTES PLACÉES EN RANGÉES, VÉHICULE ET VÉHICULE CORRESPONDANTS

(30) Priorität: 01.08.2023 DE 102023120383
(43) Veröffentlichungstag der Anmeldung: 05.02.2025
(73) Patentinhaber: Deere & Company, Moline, IL 61265 (US)
(72) Erfinder: BUSE, Scott M, 68163 Mannheim (DE); KUMAR, Akshay, 68163 Mannheim (DE); PARAGE, Paul, 69163 Mannheim (DE); FELDMANN, Philipp, 69163 Mannheim (DE); SEIMETZ, Martin, 69163 Mannheim (DE); WOLFF, Kilian, 69163 Mannheim (DE)
(74) Vertreter: Holst, Sönke

(56) Entgegenhaltungen:
- DE-A1- 102017 217 391
- US-A1- 2023 060 628
- US-A1- 2023 229 163

## Beschreibung

Die Erfindung betrifft eine Anordnung zur Erkennung einer eventuellen Abweichung eines landwirtschaftlichen Fahrzeugs von einem Sollweg bei einer Bearbeitung von in Reihen angebauten Pflanzen, sowie ein entsprechendes Fahrzeug und Verfahren.

### Stand der Technik

Bei bestimmten landwirtschaftlichen Arbeiten sind Fahrzeuge entlang definierter Wege auf einem Feld zu führen, beispielsweise beim Hacken, um zwischen Pflanzenreihen wachsende, unerwünschte Wildkräuter zu entfernen, oder bei Spritzarbeiten, wenn eine Feldspritze auf einer Fahrgasse oder zwischen Pflanzenreihen über ein Feld bewegt werden soll. Im Stand der Technik sind hierzu selbsttätige Lenksysteme vorgeschlagen worden, die anhand im Vorab abgespeicherter Wege und einer mit einem Navigationssystem erfassten, aktuellen Position und Ausrichtung des Fahrzeugs und einer Soll-Fahrspur und/oder anhand einer optischen Erfassung des Felds vor dem Fahrzeug ein Lenksignal bereitstellen, um dem Bediener des Fahrzeugs die Arbeit zu erleichtern (vgl. beispielsweise US 6 445 983 B1, EP 1 266 553 A2, WO 2008/150418 A1, WO 2018/067473 A1, Wan, X., Liu, G. (2008). Automatic Navigation System with Multiple Sensors. In: Li, D. (eds) Computer and Computing Technologies in Agriculture, Volume II. CCTA 2007. The International Federation for Information Processing, vol 259. Springer, Boston, Ma.). Diese optischen Sensoren blicken vom Fahrzeug nach vorn, um das zu bearbeitende Feld zu erfassen, auch wenn sie an der Unterseite des Fahrzeugs z.B. an der Vorderachse angebracht sein können (US 2019/0195824 A1). Die WO 2014/105928 A1 beschreibt ein Lenksystem mit einer unterhalb des Fahrzeugs angebrachten, nach unten blickenden Kamera, die in nacheinander aufgenommenen Bilder bestimmte Merkmale und deren unterschiedlichen Positionen erkennt und somit die Bewegung des Fahrzeugs ermitteln kann, um ein Lenksignal zu erzeugen.

Im Stand der Technik wurde vorgeschlagen, während eines Erntevorgangs den Boden rückwärtig eines Erntevorsatzes mittels einer Kamera zu erfassen, um mögliche Bodenberührungen des Erntevorsatzes oder stehen gebliebenes Erntegut erkennen und nötigenfalls Einstellungen des Erntevorsatzes korrigieren zu können (EP 2 545 761 A1, DE 10 2019 207 984 A1, EP 4 140 238 A1). Eine Fahrgassenkamera unterhalb einer selbstfahrenden Feldspritze, die aus einer Position oberhalb des Rades einen Blick auf das Rad und die Fahrgasse ermöglicht und somit störenden Einflüssen durch Umgebungslicht ausgesetzt ist, wird in dem Prospekt DAMMANN-trac DT 2800 H S5 ecodrive, Druckvermerk Nov2019 DE erwähnt. Die US 2023/0060628 A1 beschreibt eine landwirtschaftliche Maschine mit den Rädern benachbarten Fühlern, die mit auf dem Feld stehenden Pflanzen zusammenwirken, um deren Position zu erkennen. Eine Kamera erfasst zwei seitlich benachbarte (Vorder- oder Hinter-) Räder.

### Aufgabe

Die bisherigen, auf optischen Sensoren und/oder Navigationssystemen basierenden Lenksysteme zur Führung landwirtschaftlicher Fahrzeuge entlang von Fahrgassen oder Pflanzenreihen sind nicht in der Lage zu erkennen, ob das Fahrzeug wirklich entlang der gewünschten Spur gelenkt wird oder nicht, denn eventuelle Fehler, die durch die Sensoren selbst (z.B. Fehler der optischen Sensoren bei der Erkennung von Merkmalen auf dem Feld oder fehlerhafte Positions- oder Orientierungsbestimmung des Fahrzeugs beim Lenken oder beim zuvor erfolgten Erzeugen der Soll-Fahrspur) oder in der Regelschleife (äußere Einflüsse, wie z.B. Hangneigung oder Schlupf der Räder) entstehen und dazu führen, dass Pflanzen oder -reihen unbeabsichtigt überfahren werden, werden nicht erkannt. Die erwähnten, zur Kontrolle der Arbeitsweise der Erntevorsätze verwendeten Kamerasysteme überwachen allenfalls den Boden nach dem Überfahren durch den Erntevorsatz und wären auch dann, wenn man sie an ein entlang von Reihen zu lenkendem Fahrzeug anbringen würde, nicht in der Lage, zu erkennen, ob oder wodurch eventuelle Pflanzenschäden entstanden sind.

Es wäre daher wünschenswert, dem Bediener eines landwirtschaftlichen Fahrzeugs und/oder einem Lenksystem des Fahrzeugs eine Information zur Verfügung zu stellen, ob die (durch den Bediener oder das Lenksystem) erfolgende Lenkung korrekt ist oder durch Überfahren zu Schäden an den Pflanzen führt.

### Lösung

Diese Aufgabe wird erfindungsgemäß durch die Lehre der Patentansprüche 1, 7 und 8 gelöst, wobei in den weiteren Patentansprüchen Merkmale aufgeführt sind, die die Lösung in vorteilhafter Weise weiterentwickeln.

Eine Anordnung, ein damit ausgestattetes Fahrzeug, und ein Verfahren zur Erkennung einer eventuellen Abweichung eines landwirtschaftlichen Fahrzeugs von einem Sollweg bei einer Bearbeitung von in Reihen angebauten Pflanzen verwenden ein bildgebendes Sensorsystems, dessen Bildfeld die Räder des Fahrzeugs und gleichzeitig die den Rädern benachbarten Reihen der Pflanzen umfasst. Das bildgebende Sensorsystem ist mit einem Prozessor verbunden, der programmiert ist, anhand des Ausgangssignals des bildgebenden Sensorsystems eventuell von den Rädern überfahrene Pflanzen zu erkennen, wobei der Prozessor programmiert ist, einerseits die seitliche Position der Räder und andererseits die seitliche Position der Pflanzen im Bildsignal des bildgebenden Sensorsystems zu erfassen und im Falle einer erkannten seitlichen Überdeckung der Reifen der Räder und der Pflanzen überfahrene Pflanzen zu erkennen.

Dadurch besteht die Möglichkeit, dass ein Bediener oder ein selbsttätiges System erkennt, wenn die Pflanzen überfahren werden und entsprechende Korrekturmaßnahmen können eingeleitet werden. Zudem kann das bildgebende Sensorsystem ein selbsttätiges Lenksystems unterstützen.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines landwirtschaftlichen Fahrzeugs mit einer Anordnung zur selbsttätigen Führung des Fahrzeugs über ein Feld,
- Fig. 2: eine Draufsicht auf das Fahrzeug bei der Arbeit auf dem Feld,
- Fig. 3: ein Beispiel für ein Bild, das dem Bediener des Fahrzeugs auf einer Anzeigeeinrichtung angezeigt wird, und
- Fig. 4: ein Schema zur Berücksichtigung der Signale der die Pflanzen und Räder beobachtenden Kamera zur Korrektur von auf äußeren Störgrößen beruhenden, eventuellen Fehlern des Lenksignals.

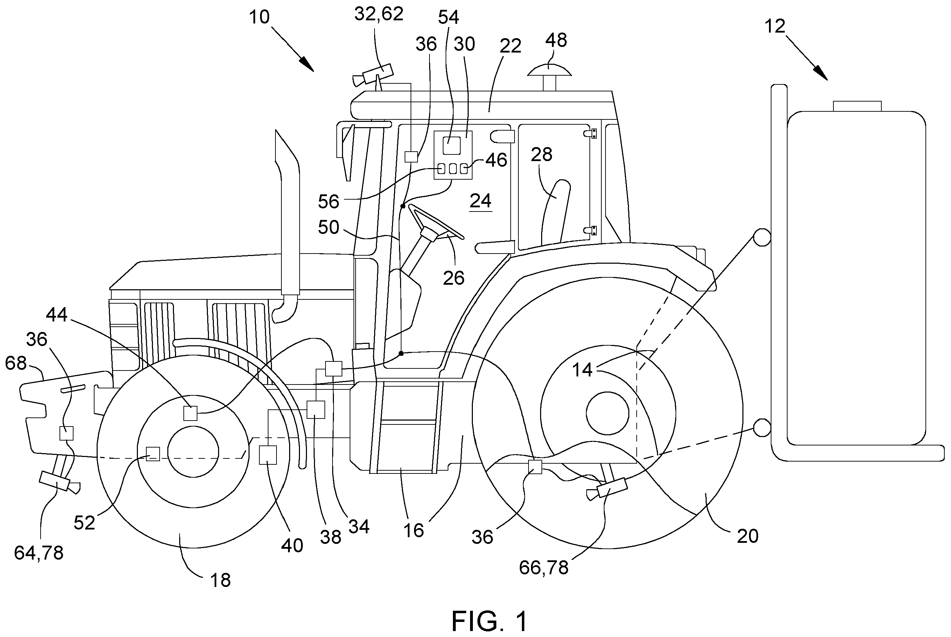

Die Figur 1 zeigt eine seitliche Ansicht eines selbstfahrenden, landwirtschaftlichen Fahrzeugs 10 in Form eines landwirtschaftlichen Ackerschleppers und eines an einem Dreipunktgestänge 14 des Fahrzeugs 10 angebauten Arbeitsgeräts 12 in Form einer Feldspritze. Das Fahrzeug 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz 28, Pedale (nicht gezeigt) und eine Ein- und Ausgabeeinheit 30. Im Folgenden beziehen sich Richtungsangaben, wie vorn und hinten oder seitlich, auf die Vorwärtsrichtung des Fahrzeugs 10, die in der Figur 1 nach links verläuft.

Das Fahrzeug 10 umfasst eine Anordnung zur selbsttätigen Führung des Fahrzeugs über ein Feld, welche ein visuelles Sensorsystem 62 mit einer als Mono- oder Stereokamera ausgeführten Kamera 32 (und/oder einen abtastenden, aktiven Sensor, z.B. ein Lidarsystem), ein mit dem Bildsensor der Kamera 32 signalübertragend verbundenes Bildverarbeitungssystem 36, eine auf dem Dach der Kabine 22 montierte Navigationseinheit 48, eine Lenksignalberechnungseinheit 46 und eine Lenksteuerung 34 umfasst.

Die Navigationseinheit 48 ist zum Empfang von Signalen eines satellitenbasierten Navigationssystems (GNSS, wie GPS, Galileo etc.) eingerichtet. Die Navigationseinheit 48 kann mit einem Trägheitsnavigationssystem ausgestattet sein, um die Genauigkeit der Positionssignale insbesondere bei ungünstigen Empfangsbedingungen zu verbessern. Zudem kann sie mit einem Empfänger zum Empfang von Korrektursignalen eines entsprechenden Systems (DGPS, RTK) zur Verbesserung der Präzision der Signale des Navigationssystems verbunden sein, und/oder mit odometrischen Sensoren, welche die Lenkrichtung und Bewegung der Vorderräder 18 erfassen, d.h. einem Lenkwinkelsensor 44 und einem Drehzahlsensor zur Erfassung der Drehung der Vorderräder. Die odometrisch erfassten Signale werden üblicherweise mit denen des Trägheitsnavigationssystems und der satellitenbasierten, ggf. korrigierten Signale verschmolzen, z.B. durch einen Kalman-Filter. Die Navigationseinheit 48 gibt in regelmäßigen Zeitabständen ein Signal hinsichtlich ihrer zwei- oder dreidimensionalen Position und optional der Geschwindigkeit und/oder Ausrichtung aus.

Das Bildverarbeitungssystem 36, die Navigationseinheit 48, die Lenksignalberechnungseinheit 46 und die Lenksteuerung 34 sind untereinander über ein Bussystem 50 verbunden, das beispielsweise nach dem Protokoll gemäß ISO 11783 oder einem Nachfolger davon arbeiten kann.

Die Lenksignalberechnungseinheit 46 ist in einer Ein- und Ausgabeeinheit 30 räumlich integriert, die mit einer Bedienerschnittstelle in Form einer Anzeigeeinheit 54 und einer Eingabeeinrichtung 56 versehen ist. Die Ein- und Ausgabeeinheit 30 kann die Funktion eines virtuellen Displays gemäß ISO 11783 erfüllen.

Die Lenksteuerung 34 ist mit einem Ventil 38 zur Kontrolle eines Lenkaktors 40 und mit dem Lenkwinkelsensor 44 zur Erfassung des aktuellen Lenkwinkels der Vorderräder 18 verbunden.

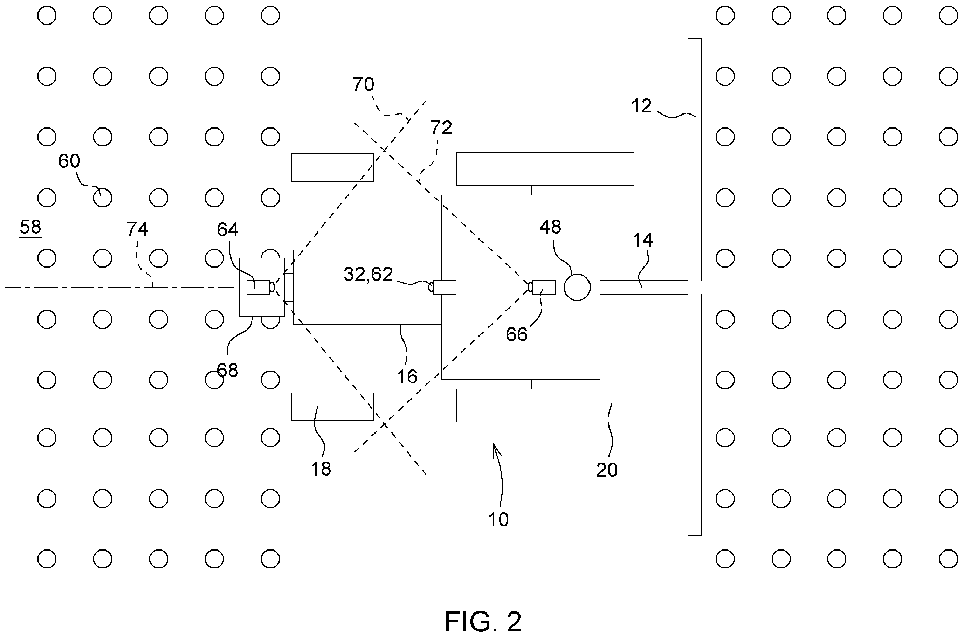

In der Figur 2 ist eine Draufsicht auf das Fahrzeug 10 bei der Arbeit auf einem Feld 58 dargestellt, auf dem sich in Reihen angebaute Pflanzen 60 befinden. Die Lenksteuerung 34 wird durch die Lenksignalberechnungseinheit 46 basierend auf den insbesondere fusionierten Signalen des visuellen Sensorsystems 62 (Kamera 32) und der Navigationseinheit 48 derart angesteuert, dass die Vorderräder 18 und die Hinterräder 20 zwischen den Reihen der Pflanzen 60 entlangfahren, ohne die Pflanzen 60 zu überfahren. Das visuelle Sensorsystem 62 kann dabei die Pflanzen 60 erfassen (vgl. beispielsweise US 6 445 983 B1, EP 1 266 553 A2, WO 2008/150418 A1, WO 2018/067473 A1, Wan et al., a.a.O., sowie die Patentanmeldung DE 10 2023 119 302.3), und/oder Fahrgassen bzw. Fahrspuren zwischen den Pflanzen 60, vgl. DE 10 2016 209 437 A1 erkennen. Das Arbeitsgerät 12 könnte auch ein beliebiges anderes Arbeitsgerät 12 sein, z.B. eine Hacke, die zum Entfernen von unerwünschten Wildkräutern zwischen den Reihen der Pflanzen 60 dient.

Wie eingangs bereits erwähnt, sind Situationen denkbar, in denen das automatische Lenksystem, das vorliegend aus dem visuellen Sensorsystem 32, dem Bildverarbeitungssystem 36, der Navigationseinheit 48, der Lenksignalberechnungseinheit 46 und der Lenksteuerung 34 aufgebaut ist, aufgrund bestimmter Fehlereinflüsse nicht korrekt arbeitet und die Räder 18, 20 des Fahrzeugs 10, das im Übrigen auch als selbstfahrende Feldspritze ausgeführt sein könnte, die Pflanzen 60 auf dem Feld 58 überfährt. Um derartige Probleme erkennen zu können, ist ein bildgebendes Sensorsystem 78 mit einer Kamera 64 und/oder 66 vorgesehen. Die Kamera 64 ist vor der Vorderachse des Fahrzeugs 10 an dessen Unterseite angeordnet (in der Figur 1 an einem Frontgewicht 68) und blickt von dort nach hinten und unten. Eine weitere Kamera 66 ist unterseitig an der Hinterachse zwischen den Rädern 20 oder an einer anderen, geeigneten Stelle unterseitig des Fahrzeugs 10 in dessen rückwärtigen Bereich angeordnet und blickt von dort nach vorn und unten. Die Kamera 64 und/oder 66 kann als Schwarz-Weiß-Kamera, Farbkamera, Multispektralkamera oder Infrarotkamera ausgeführt sein, und zwar in Mono- oder Stereoversion oder als PMD-Kamera. Anstelle der Kamera 64, 66 oder zusätzlich dazu kann auch ein abtastender Laser-Sensor (Lidar) Verwendung finden.

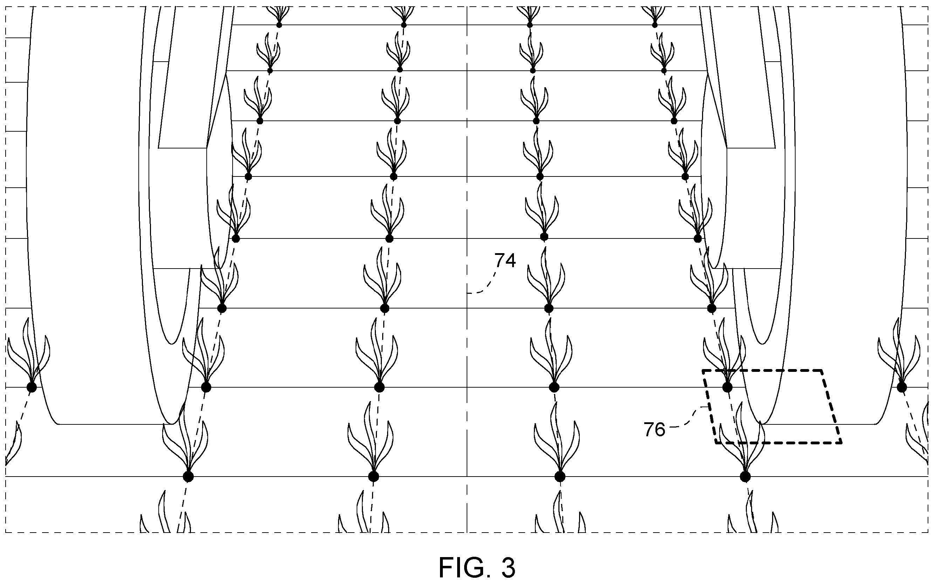

In der Figur 2 sind die seitlichen Grenzen 70, 72 der Sichtbereiche der Kameras 64 und 66 eingezeichnet. Die Kameras 64, 66 erfassen demnach das Feld unterhalb des Fahrzeugs 10, die dort vorhandenen Pflanzen 60 und die Räder 18, 20. Da die vorderen und Räder 18, 20 in der Regel spurgleich, d.h. nicht seitlich versetzt zueinander laufen, würde es grundsätzlich ausreichen, wenn die Kameras 64, 66 nur die hinteren oder vorderen Räder 18, 20 erfassen, obwohl eine Erfassung zumindest der Aufstandspunkte aller vier Räder 18, 20 bevorzugt ist, wie in der Figur 3 gezeigt. Der Bildwinkel der Kameras 64, 66 sollte dazu hinreichend groß sein (Superweitwinkel oder Fischauge oder separate Kameras für die linke und rechte Seite). Die Bildsignalausgänge einer oder beide der Kameras 64 und/oder 66 sind direkt oder über Bildverarbeitungssysteme 36 und das Bussystem 50 mit der Ein- und Ausgabeeinheit 30 verbunden. Dadurch wird es möglich, auf der Anzeigeeinheit 54 ein Bild anzuzeigen, wie es in der Figur 3 dargestellt ist. Der Bediener des Fahrzeugs 10 ist somit in der Lage zu erkennen, ob die Räder 18, 20 über die Pflanzen 60 fahren oder nicht und nötigenfalls geeignete Maßnahmen zu treffen. Im Falle einer rein manuellen Lenkung des Fahrzeugs 10 mittels des Lenkrads 26 kann der Bediener demnach entsprechend gegensteuern oder im Falle einer selbsttätigen Lenkung durch das automatische Lenksystem dieses abschalten und selbst die Lenkung mittels des Lenkrads 26 übernehmen. Falls kein automatisches Lenksystem vorhanden ist, sondern nur der Bediener die Lenkung des Fahrzeugs über das Lenkrad 26 bewerkstelligt, kann die Anzeigeeinheit 54 dem Bediener helfen, derart zu lenken, dass keine Pflanzen 60 überfahren werden.

Das Bildverarbeitungssystem 36 oder ein Prozessor der Ein- und Ausgabeeinheit 30 oder der Lenksignalberechnungseinheit 46 kann konfiguriert sein, nach Aufrufen eines entsprechenden Menüpunkts der Ein- und Ausgabeeinheit 30, eine oder mehrere oder alle der folgenden Daten zu berechnen und gemeinsam mit dem bearbeiteten oder unbearbeiteten Bildsignal der Kamera 64, 66, zwischen denen der Bediener auch umschalten kann, auf der Anzeigeeinheit 54 anzuzeigen:
(a) eine Darstellung des Sollwegs 74, den die Lenksignalberechnungseinheit 46 gerade abfährt, um dem Bediener zu ermöglichen, eventuelle Fehler der Lenksignalberechnungseinheit 46 beim Berechnen des Sollwegs 74 zu erkennen. Der Bediener kann auch eine Eingabemöglichkeit bekommen, den Sollweg 74 nötigenfalls nach links oder rechts zu verschieben oder einen Vorschlag erhalten, eine manuelle Lenkung mittels des Lenkrads 26 durchzuführen (und dabei das auf der Anzeigeeinheit 54 wiedergegebene Bild berücksichtigen). Auch kann anhand eines Vergleichs zwischen Sollweg 74 und den Pflanzen 60 im Bild der Kameras 64 und/oder 66 erkannt werden, wenn das Fahrzeug 10 zu einer Seite hin abdriftet und ein entsprechender Hinweis an den Bediener über die Anzeigeeinheit 54 gegeben werden. Er kann dann selbst die Lenkung übernehmen oder eine entsprechende Korrektureingabe an die Lenksignalberechnungseinheit 46 vornehmen.
(b) in oder neben oder über oder unter dem in Figur 3 gezeigten Bild können auch weitere Informationen angezeigt werden, wie die derzeitige Windrichtung und Windstärke, die mit einer Wetterstation am Fahrzeug 10 gemessen (s. EP 1 321 037 A2) oder die anhand externer, an das Fahrzeug 10 übertragener Daten ermittelt werden kann. Hierdurch kann der Bediener erkennen, wenn das visuelle Sensorsystem 62 durch Windeinfluss die Lage der Pflanzenreihen nicht korrekt erkennen sollte und nötigenfalls eine Korrektureingabe an die Lenksignalberechnungseinheit 46 vornehmen.
(c) zudem kann Information hinsichtlich der Reifen der Räder 18, 20, wie deren Breite, und Information hinsichtlich möglicherweise überfahrener Pflanzen 60 angezeigt werden, sei es, dass nur ein Hinweis gegeben wird, dass überhaupt Pflanzen 60 überfahren werden (z.B. indem in diesem Falle eine Markierung 76 im angezeigten Bild angezeigt wird, z.B. im Bereich des betroffenen Reifens und der dortigen Pflanzen) oder ein quantitativer Hinweis über den Anteil der überfahrenen Pflanzen 60 (z.B., dass ein bestimmter Prozentsatz der Pflanzen 60 einer oder mehrerer Reihen derzeit oder bei der Bearbeitung eines Felds 58 bereits überfahren wurden oder voraussichtlich überfahren werden, oder eine Hochrechnung, wie hoch die Auswirkung auf den Ertrag sein wird) gegeben wird. Insbesondere kann die Information über die Anzahl der überfahrenen Pflanzen 10 verwendet werden, um ein Maß zu berechnen, das den Prozentsatz der beschädigten Pflanzen 10 angibt, während das System das Fahrzeug 10 aktiv lenkt. Dieses Maß ist ein guter Indikator für die Arbeitsqualität und kann verwendet werden, um mögliche Fehler zu erkennen und den Bediener darüber zu informieren, dass das System Probleme hat, eine Kalibrierung oder Wartung erforderlich ist.

Das Bildverarbeitungssystem 36 oder der Prozessor der Ein- und Ausgabeeinheit 30 oder der Lenksignalberechnungseinheit 46 ist demnach programmiert, im Bild der Kamera 64 und/oder 66 überfahrene Pflanzen 60 zu erkennen. Das kann in der Weise erfolgen, dass im Bild der Kamera 64 und/oder 66 einerseits erkannt wird, an welcher seitlichen Position sich zumindest die den Rädern 18, 20 benachbarten Pflanzen 60 im Bild befinden, und andererseits erkannt wird, an welcher seitlichen Position im Bild sich die Reifen der Räder 18, 20 befinden. Die Pflanzen 60 können im einfachsten Fall anhand ihrer üblicherweise grünen Farbe und/oder anhand ihrer Form und/oder Textur oder dgl. erkannt werden, was analog für die üblicherweise schwarze Farbe und/oder rechteckige und/oder ggf. mit Stollen versehene Form der Reifen gilt, während eine Unterscheidung vom Feld 58 anhand von dessen Lage, Textur und/oder Farbe möglich ist. Eine eventuelle seitliche Überdeckung der Reifen und der Pflanzen 60 kann somit leicht erkannt und zur Erzeugung eines entsprechenden Signals verwendet werden. Die gleichzeitige Erfassung der Räder 18, 20 und ihrer Reifen einerseits sowie der Reihen der Pflanzen 60 andererseits hat den Vorteil, dass sie relativ einfach möglich ist und man eine Überdeckung leicht erkennen kann, und dass keine Bildverarbeitung zur Erkennung beschädigter Pflanzen vonnöten ist, wie sie zwar prinzipiell durch eine vom Fahrzeug 10 nach hinten oder unten blickende Kamera (nicht gezeigt, vgl. aber den Stand der Technik nach EP 2 545 761 A1, DE 10 2019 207 984 A1, EP 4 140 238 A1), die nicht die Räder 18, 20 und deren Reifen erfasst, möglich wäre, jedoch komplizierter und fehleranfälliger ist.

Bei einer möglichen Ausführungsform kann das Signal einer oder beider der Kameras 64, 66 (unabhängig von einer evtl. Erkennung überfahrener Pflanzen oder zusätzlich dazu) das Signal der Kamera 32 des visuellen Sensorsystems 62 ergänzen oder ersetzen, denn auch die Kameras 64 und/oder 66 liefern der Lenksignalberechnungseinheit 46 eine Information über die seitliche Lage und Ausrichtung der Reihen der Pflanzen 60 gegenüber dem Fahrzeug 10. Die Lenksignalberechnungseinheit 46 erhält demnach von den Bildverarbeitungssystemen 36 der Kameras 32 und 64 und/oder 66 eine Information hinsichtlich der jeweils erfassten seitlichen Lage und Ausrichtung der Reihen der Pflanzen 60 gegenüber dem Fahrzeug 10 und einer relativen Genauigkeit. Gegebenenfalls, d.h. wenn in bestimmten Situationen das Signal der Kamera 64 und/oder 66 genauer als jenes der Kamera 32 sein sollte, z.B. bei verunkrauteten Feldern oder ungünstigen Beleuchtungssituationen (Gegenlicht, z.B. durch tiefstehende Sonne), wird das Signal der Kamera 64 und/oder 66 zur Erzeugung des Lenksignals verwendet, insbesondere in Kombination (nach Fusionieren) mit einer anhand eines abgespeicherten Wegs und des Signals der Navigationseinheit 48 berechneten seitlichen Lage und Ausrichtung der Reihen der Pflanzen 60 gegenüber dem Fahrzeug 10. Hierzu sei noch einmal auf die Offenbarung der Patentanmeldung DE 10 2023 119 302.3 verwiesen, die durch Verweis mit in die vorliegenden Unterlagen aufgenommen wird.

Falls die Kamera 32 als Stereokamera ausgeführt ist, kann das zugehörige Bildverarbeitungssystem 36 eine dreidimensionale Punktwolkeninformation der Umgebung (d.h. der Fläche vor dem Fahrzeug 10) liefern. Eine Teilmenge der dreidimensionalen Punkte, die zu einer repräsentativen Fläche gehört, welche die Neigung des Geländes vor dem Fahrzeug 10 beschreibt, kann identifiziert werden. Ein ideales Szenario wäre ein offenes Feld, bei dem jeder erfasste Punkt zum Erdboden gehört. Bei Bedingungen mit Pflanzen gehören manche Punkte zu den Pflanzen 60 und manche zum Erdboden. Entweder können Punkte auf dem Boden ausgefiltert und zur Anpassung an eine Ebene verwendet werden oder es werden alle Punkte verwendet, sodass die angepasste Ebene eine durchschnittliche, gegenüber dem Erdboden angehobene Ebene darstellt. Wie dem auch sei, enthält diese angepasste Ebene eine Information über die Neigung des Geländes (in Vorwärts- und Seitenrichtung) gegenüber einer Referenzebene des Fahrzeugs 10. Man erkennt demnach, wenn sich das Gelände vor dem Fahrzeug gegenüber der Aufstandsebene des Fahrzeugs 10 geneigt sein sollte.

Diese Neigungsinformation der Stereokamera 32 (oder eine aus einer Karte des Felds entnommene Neigung) kann gemeinsam mit den Signalen der Kamera 64 und/oder 66 verarbeitet werden, denn für letztere ändert sich nichts, wenn das Fahrzeug 10 auf einer Neigung fährt, da sie immer den Boden unter dem Fahrzeug 10 erfasst und der Boden für sie somit immer horizontal ist. Wenn sich somit die Neigung des Felds 58 ändern sollte, können die Bilder der Kamera 32 (bzw. Daten für einen abgespeicherten Weg) unter Verwendung der Neigung des Geländes vor dem Fahrzeug 10 mit den Signalen der Kamera 64 und/oder 66 zusammengeführt werden, um insbesondere im Übergangsbereich Lenkfehler zu vermeiden. Mit anderen Worten kennt das Bildverarbeitungssystem 36 der Kamera 64 und/oder 66 die dreidimensionale Form des Felds 58 vor dem Fahrzeug 10 und kann somit eventuelle Fehler in den Signalen der Kamera 64 und/oder 66, die bei einer Änderung der Neigung des Geländes und somit auch des Fahrzeugs 10 entstehen könnten, vermeiden.

Weiterhin beruht die anhand des visuellen Lenksystems 62 erfolgende Lenkung des Fahrzeugs 10 im Stand der Technik darauf, dass der abzufahrende Sollweg 74 auf einen Referenzpunkt des Fahrzeugs 10, bei dem es sich insbesondere um die hintere Achse des Fahrzeugs 10 handeln kann, extrapoliert wird (vgl. US 6 445 983 B1). Das ist dann problematisch, wenn (z.B. nach Abstellen des Fahrzeugs 10) wieder ein erstes Bild erfasst wird, das dann unabhängig von der tatsächlichen Bewegung des Fahrzeugs 10 oder sogar im Stillstand anhand eines abgespeicherten Datensatzes auf eine Position unterhalb der Hinterachse des Fahrzeugs 10 extrapoliert wird und später anhand der danach erfassten Bilder korrigiert wird. Die Kamera 64 und/oder 66 kann (unabhängig von einer evtl. Erkennung überfahrener Pflanzen oder zusätzlich dazu) dazu dienen, den abgespeicherten Datensatz zu ersetzen oder zu modifizieren, um den vom visuellen Lenksystem 62 erzeugten Weg auf den Referenzpunkt, insbesondere die Hinterachse, des Fahrzeugs 10 mit den unterhalb des Fahrzeugs 10 erfassten Reihen der Pflanzen 60 auszurichten und somit genauer zu machen. Dadurch kann die Lenkung anhand der Reihen der Pflanzen verbessert werden, wenn das Fahrzeug 10 für eine Zeit insbesondere beim Befahren einer gekrümmten Reihe von Pflanzen angehalten und später der Betrieb wieder aufgenommen wird. Mit anderen Worten wird der Teil des Sollwegs 74, der sich unmittelbar vor dem Fahrzeug 10, d.h. rückwärtig des Sichtfelds des visuellen Lenksystems 62, und unterhalb des Fahrzeugs 10 befindet, bei (Wieder-) Aufnahme eines automatischen, auf dem visuellen Lenksystem 62 basierenden Lenkvorgangs anhand der Signale der Kamera 64 und/oder 66 erstellt.

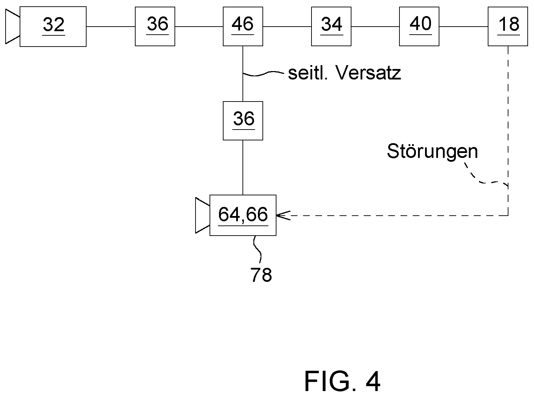

Zudem besteht die Möglichkeit, dass die Lenksignalberechnungseinheit 46 im Falle einer in der oben beschriebenen Weise erfolgenden Erkennung überfahrener Pflanzen 60 den jeweils abgefahrenen Sollweg 74, auf dem das Lenksignal an die Lenksteuerung 34 beruht, im Sinne eines Vermeidens eines Überfahrens von Pflanzen 60 in seitlicher Richtung zu verschieben. Das Signal der Kamera 64 und/oder 66 dient demnach als Rückkopplungssignal an die Lenksignalberechnungseinheit 46, wie in der Figur 4 schematisch dargestellt ist. Störungen, die beispielsweise durch eine seitliche Hangneigung bedingt sein können, die das Fahrzeug 10 nach links oder rechts abweichen lassen und zumindest bei einer nur auf dem visuellen Sensorsystem 62 beruhenden Lenkung nicht erfasst werden, werden auf diese Weise korrigiert. Andere, mögliche Störungen können Schlupf der Räder 18, 20 sein, oder Fehler des visuellen Sensorsystems 62 oder im abgespeicherten Sollweg, auf dem eine anhand der Navigationseinheit 48 erfolgende Lenkung beruht.

Wie in den Figuren 1 bis 3 ersichtlich ist, liegen der von der Kamera 64 beobachtete Bereich (d. h. die Hinterräder 20) und die Position der Navigationseinheit 48 in Vorwärtsrichtung des Fahrzeugs 10 relativ nahe beieinander und auch zu dem Kontrollpunkt des Fahrzeugs 10 (der zum Erzeugen des Lenksignals verwendet wird, vgl. US 6 455 983 B1), der sich in der Mitte der Hinterachse befindet. Auf diese Weise werden etwaige Fehler zwischen optisch erfassten Merkmalen und der von der Navigationseinheit 48 erfassten Fahrzeugposition und -orientierung aufgrund von Versätzen in Vorwärtsrichtung reduziert oder vermieden.

## Patentansprüche

1. Anordnung zur Erkennung einer eventuellen Abweichung eines landwirtschaftlichen Fahrzeugs (10) von einem Sollweg (74) bei einer Bearbeitung von in Reihen angebauten Pflanzen (58) mittels eines bildgebenden Sensorsystems (78), dessen Bildfeld die Räder (18, 20) des Fahrzeugs und gleichzeitig die den Rädern (18, 20) benachbarten Reihen der Pflanzen (58) umfasst, wobei das bildgebende Sensorsystem (78) mit einem Prozessor verbunden ist, der programmiert ist, anhand des Ausgangssignals des bildgebenden Sensorsystems (78) eventuell von den Rädern (18, 20) überfahrene Pflanzen (58) zu erkennen, wobei der Prozessor programmiert ist, einerseits die seitliche Position der Räder (18, 20) und andererseits die seitliche Position der Pflanzen im Bildsignal des bildgebenden Sensorsystems (78) zu erfassen und im Falle einer erkannten seitlichen Überdeckung der Reifen der Räder (18, 20) und der Pflanzen (60) überfahrene Pflanzen zu erkennen.

2. Anordnung nach Anspruch 1, wobei das bildgebende Sensorsystem (78) mit einer Anzeigeeinheit (54) verbunden ist, auf welcher ein auf dem Ausgangssignal des bildgebenden Sensorsystems (78) beruhendes Bild der Räder (18, 20) und der benachbarten Pflanzen (58) und/oder eine anhand des Ausgangssignal des bildgebenden Sensorsystems (78) berechnete Information zur Anzeige bringbar ist.

3. Anordnung nach Anspruch 1 oder 2, wobei der Prozessor programmiert ist, die Räder (18, 20) und/oder die Pflanzen (58) anhand von deren Farbe, Form und/oder Textur zu erkennen.

4. Anordnung nach einem der vorhergehenden Ansprüche, wobei das bildgebende Sensorsystem (78) mit einer Lenksignalberechnungseinheit (46) verbunden ist, die konfiguriert ist, anhand der Signale eines vom Fahrzeug (10) nach vorn blickenden, visuellen Sensorsystems (62) und/oder einer Navigationseinheit (48) ein Lenksignal für das Fahrzeug (10) zu erzeugen und die Lenksignalberechnungseinheit (46) konfiguriert ist, das Signal des bildgebenden Sensorsystems (78) zur Erzeugung und/oder Korrektur des Lenksignals zu verwenden.

5. Anordnung nach Anspruch 4, wobei die Lenksignalberechnungseinheit (46) konfiguriert ist, im Falle eines anhand des Signals des bildgebenden Sensorsystems (78) erkannten Überfahrens der Pflanzen (60) einen zur Erzeugung des Lenksignals verwendeten Sollweg (74) selbsttätig oder anhand einer Bedienereingabe im Sinne einer Vermeidung des Überfahrens der Pflanzen (60) seitlich zu verschieben und/oder den Sollweg (74) unter Verwendung des Signals des bildgebenden Sensorsystems (78) zu erzeugen und/oder einen mittels des visuellen Sensorsystem (62) erzeugten Sollweg (74) auf einen Referenzpunkt am Fahrzeug (10), insbesondere dessen Hinterachse, zu verlängern.

6. Anordnung nach einem der vorhergehenden Ansprüche, wobei das bildgebende Sensorsystem (78) eine Kamera (64, 66) umfasst, die an der Vorder- oder Rückseite des Fahrzeugs (10) unterhalb des Fahrzeugs (10) oder eines Gegengewichts (68) angebracht ist und nach hinten oder vorn blickt.

7. Fahrzeug (10) mit einer Anordnung nach einem der vorhergehenden Ansprüche.

8. Verfahren zur Erkennung einer eventuellen Abweichung eines landwirtschaftlichen Fahrzeugs (10) von einem Sollweg (74) bei einer Bearbeitung von in Reihen angebauten Pflanzen (58) mittels eines bildgebenden Sensorsystems (78), dessen Bildfeld die Räder (18, 20) des Fahrzeugs und gleichzeitig die den Rädern (18, 20) benachbarten Reihen der Pflanzen (58) umfasst, wobei das bildgebende Sensorsystem (78) mit einem Prozessor verbunden ist, der anhand des Ausgangssignals des bildgebenden Sensorsystems (78) eventuell von den Rädern (18, 20) überfahrene Pflanzen (58) erkennt, wobei der Prozessor einerseits die seitliche Position der Räder (18, 20) und andererseits die seitliche Position der Pflanzen im Bildsignal des bildgebenden Sensorsystems (78) erfasst und im Falle einer erkannten seitlichen Überdeckung der Reifen der Räder (18, 20) und der Pflanzen (60) überfahrene Pflanzen erkennt.

## Claims

1. Arrangement for detecting a possible deviation of an agricultural vehicle (10) from a target path (74) when treating crops (58) grown in rows by means of an imaging sensor system (78), the image field of which comprises the wheels (18, 20) of the vehicle and at the same time the rows of crops (58) adjacent to the wheels (18, 20), wherein the imaging sensor system (78) is connected to a processor which is programmed to detect crops (58) possibly driven over by the wheels (18, 20) on the basis of the output signal from the imaging sensor system (78), wherein the processor is programmed, on the one hand, to capture the lateral position of the wheels (18, 20) and, on the other hand, to capture the lateral position of the crops in the image signal from the imaging sensor system (78) and, if a lateral overlap of the tyres of the wheels (18, 20) and of the crops (60) is detected, to identify crops that have been driven over.

2. Arrangement according to Claim 1, wherein the imaging sensor system (78) is connected to a display unit (54) on which an image of the wheels (18, 20) and of the adjacent crops (58), which is based on the output signal from the imaging sensor system (78), and/or information calculated on the basis of the output signal from the imaging sensor system (78) can be displayed.

3. Arrangement according to Claim 1 or 2, wherein the processor is programmed to recognize the wheels (18, 20) and/or the crops (58) on the basis of their colour, shape and/or texture.

4. Arrangement according to one of the preceding claims, wherein the imaging sensor system (78) is connected to a steering signal calculation unit (46) which is configured to generate a steering signal for the vehicle (10) on the basis of the signals from a visual sensor system (62) looking forward from the vehicle (10) and/or from a navigation unit (48), and the steering signal calculation unit (46) is configured to use the signal from the imaging sensor system (78) to generate and/or correct the steering signal.

5. Arrangement according to Claim 4, wherein the steering signal calculation unit (46) is configured, in the event of the crops (60) being driven over, as detected on the basis of the signal from the imaging sensor system (78), to laterally shift a target path (74) used to generate the steering signal automatically or on the basis of an operator input for the purposes of avoiding the crops (60) being driven over, and/or to generate the target path (74) using the signal from the imaging sensor system (78) and/or to extend a target path (74) generated by means of the visual sensor system (62) to a reference point on the vehicle (10), in particular the rear axle thereof.

6. Arrangement according to one of the preceding claims, wherein the imaging sensor system (78) comprises a camera (64, 66) which is attached to the front or rear side of the vehicle (10) below the vehicle (10) or a counterweight (68) and looks backwards or forwards.

7. Vehicle (10) having an arrangement according to one of the preceding claims.

8. Method for detecting a possible deviation of an agricultural vehicle (10) from a target path (74) when treating crops (58) grown in rows by means of an imaging sensor system (78), the image field of which comprises the wheels (18, 20) of the vehicle and at the same time the rows of crops (58) adjacent to the wheels (18, 20), wherein the imaging sensor system (78) is connected to a processor which detects crops (58) possibly driven over by the wheels (18, 20) on the basis of the output signal from the imaging sensor system (78), wherein the processor, on the one hand, captures the lateral position of the wheels (18, 20) and, on the other hand, captures the lateral position of the crops in the image signal from the imaging sensor system (78) and, if a lateral overlap of the tyres of the wheels (18, 20) and of the crops (60) is detected, identifies crops that have been driven over.

## Revendications

1. Ensemble destiné à identifier un écart éventuel entre un véhicule agricole (10) et une trajectoire de consigne (74) lors de travaux sur des plants (58) cultivés en rangées au moyen d'un système de capteurs d'imagerie (78) dont le champ de vision comprend les roues (18, 20) du véhicule et simultanément les rangées des plants (58) adjacentes aux roues (18, 20), le système de capteurs d'imagerie (78) étant relié à un processeur qui est programmé pour identifier des plants (58) éventuellement écrasés par les roues (18, 20) à l'aide du signal de sortie du système de capteurs d'imagerie (78), le processeur étant programmé pour détecter d'une part la position latérale des roues (18, 20) et d'autre part la position latérale des plants dans le signal d'image du système de capteurs d'imagerie (78) et pour identifier, dans le cas d'un chevauchement latéral identifié des pneus des roues (18, 20) et des plants (60), des plants écrasés.

2. Ensemble selon la revendication 1, le système de capteurs d'imagerie (78) étant relié à une unité d'affichage (54) sur laquelle peuvent être affichées une image des roues (18, 20) et des plants (58) adjacents basée sur le signal de sortie du système de capteurs d'imagerie (78) et/ou des informations calculées à l'aide du signal de sortie du système de capteurs d'imagerie (78).

3. Ensemble selon la revendication 1 ou 2, le processeur étant programmé pour identifier les roues (18, 20) et/ou les plants (58) à l'aide de leur couleur, forme et/ou texture.

4. Ensemble selon l'une des revendications précédentes, le système de capteurs d'imagerie (78) étant relié à une unité de calcul de signal de direction (46) qui est configurée pour générer, à l'aide des signaux d'un système de capteurs visuel (62) regardant depuis le véhicule (10) vers l'avant et/ou d'une unité de navigation (48), un signal de direction pour le véhicule (10) et l'unité de calcul de signal de direction (46) étant configurée pour utiliser le signal du système de capteurs d'imagerie (78) pour générer et/ou corriger le signal de direction.

5. Ensemble selon la revendication 4, l'unité de calcul de signal de direction (46) étant configurée pour déplacer latéralement, dans le cas d'un écrasement des plants (60) identifié à l'aide du signal du système de capteurs d'imagerie (78), une trajectoire de consigne (74) utilisée pour générer le signal de direction en toute autonomie ou à l'aide d'une entrée d'utilisateur au sens d'un évitement de l'écrasement des plants (60) et/ou pour générer la trajectoire de consigne (74) en utilisant le signal du système de capteurs d'imagerie (78) et/ou pour prolonger une trajectoire de consigne (74) générée au moyen du système de capteurs visuel (62) sur un point de référence sur le véhicule (10), en particulier son essieu arrière.

6. Ensemble selon l'une des revendications précédentes, le système de capteurs d'imagerie (78) comprenant une caméra (64, 66), qui est installée à l'avant ou à l'arrière du véhicule (10) sous le véhicule (10) ou d'un contrepoids (68) et regarde vers l'arrière ou vers l'avant.

7. Véhicule (10) avec un ensemble selon l'une des revendications précédentes.

8. Procédé d'identification d'un écart éventuel entre un véhicule agricole (10) et une trajectoire de consigne (74) lors de travaux sur des plants (58) cultivés en rangées au moyen d'un système de capteurs d'imagerie (78) dont le champ de vision comprend les roues (18, 20) du véhicule et simultanément les rangées des plants (58) adjacentes aux roues (18, 20), le système de capteurs d'imagerie (78) étant relié à un processeur qui, à l'aide du signal de sortie du système de capteurs d'imagerie (78), identifie des plants (58) éventuellement écrasés par les roues (18, 20), le processeur détectant d'une part la position latérale des roues (18, 20) et d'autre part la position latérale des plants dans le signal d'image du système de capteurs d'imagerie (78) et identifiant, dans le cas d'un chevauchement latéral identifié des pneus des roues (18, 20) et des plants (60), les plants écrasés.
